# EUROPEAN PATENT APPLICATION

(11) **EP 3 360 425 A1**
(43) Date of publication of application: **15.08.2018**
(21) Application number: 17155666.5
(22) Date of filing: 10.02.2017
(51) Int. Cl.: A23K 50/00, A23K 20/10, A23K 10/30, A23K 20/158, A23K 10/37

(54) **FEED COMPOSITIONS SUITABLE FOR MEAT-PRODUCING ANIMALS, USE THEREOF AND MEAT OBTAINABLE BY USING SAID FEED COMPOSITION**

(71) Applicant: Novaplot Enterprises Ltd., Limassol 3095 (CY)
(72) Inventor: DOMAZAKIS, Emmanouil, 74100 Rethymnon (GR); DOMAZAKIS, Konstantinos, 74100 Rethymnon (GR)
(74) Representative: Hess, Peter K. G.

(57) **Abstract**

The present invention refers to a feed pre-mix composition suitable for the feeding of meat-producing animals. The feed pre-mix comprises olive oil and aromatic herbs or herb species from the plant genera of *Origanum, Thymus, Salvia* or *Cistus*. The feed pre-mix is mixed with conventional feed ingredients to prepare a final feed composition which is fed to animals. The invention also relates to the final feed composition and further meat produced thereby.

## Description

The present invention relates to a feed pre-mix composition suitable for the feeding of meat-producing animals with the purpose of producing meat with distinct quality characteristics. The feed pre-mix composition contains olive oil and aromatic herbs. The invention further relates to the use of said feed pre-mix composition for feeding meat-producing animals, a feed composition containing the feed pre-mix composition, and to meat produced thereby.

It is a common fact, that the type of administered feed to animals, together with certain genetical parameters and the adopted farming methods, significantly affect the organoleptic properties and the nutritional value of the produced meat. The flavor and taste of meat comprise the totality of olfactory and gustatory stimuli perceived during chewing. Fat is an odor and flavor carrier, and as a consequence, the quantity and composition of the adipose tissue can affect the flavor of the meat.

Examples of supplementary feed mixtures, containing aromatic herbs are known in the literature. GR Patent No. 1003646 discloses a poultry feed mixture, which consists of flaxseed, thyme, oregano, red pepper flour, and vitamin E. Similarly, GR Patent No. 1006561 refers to a cattle feed mixture, consisting of flaxseed, oregano, basil, mint, coriander, alfalfa hay, and vitamin E.

The problem underlying the present invention was to develop a novel feed pre-mix for use as a part of the conventional feed administered to meat-producing animals, with the purpose of producing meat having distinct and improved organoleptic attributes, in particular aroma, flavor and tenderness, compared to meat derived from animals fed with a conventional diet.

This problem is solved by a feed pre-mix composition comprising olive oil and at least one aromatic herb or herb species selected from the group of plant genera consisting of *Origanum, Thymus, Salvia* and *Cistus.*

In preferred embodiments, the feed pre-mix composition comprises at least two, at least three or at least four aromatic herbs or herb species selected from the group of plant genera consisting of *Origanum, Thymus, Salvia* and *Cistus.* In further preferred embodiments, the feed pre-mix composition comprises one or more aromatic herbs or herb species selected from the genus *Origanum, Thymus, Salvia* or *Cistus.* In other preferred embodiments, the feed pre-mix composition comprises one or more aromatic herbs or herb species selected from each of the genus *Origanum, Thymus, Salvia* and *Cistus.* In further preferred embodiments, the feed pre-mix composition comprises at least one aromatic herb genus selected from the group of plant genera of the genus *Origanum, Thymus, Salvia* or *Cistus.* In other preferred embodiments, the feed pre-mix composition comprises one or more aromatic herb genera selected from the group of plant genera of the genus *Origanum, Thymus, Salvia* or *Cistus.* In further preferred embodiments, the feed pre-mix composition comprises at least two, at least three or all four aromatic herb genera selected from the group of plant genera of the genus *Origanum, Thymus, Salvia* or *Cistus.*

The present invention further relates to a feed composition or final feed composition comprising the feed pre-mix composition.

To the Applicant's knowledge, there is no prior art related to a feed pre-mix composition combining olive oil and aromatic herbs, and the use thereof in the feeding of meat-producing animals for the purpose of ameliorating the organoleptic and physical properties of the derivable meat, in particular its flavor, taste and tenderness.

In the context of the present invention, the term "feed pre-mix composition" refers to an animal feed pre-mix composition or a mixture of animal feed-grade ingredients. Said "feed pre-mix composition" is further combined with conventional feed ingredients to form the final feed composition. The feed pre-mix composition and the feed composition are suitable for feeding animals, in particular meat-producing animals. Herein the term "feed composition" refers to an animal feed composition. The feed pre-mix composition and the feed composition are not intended for human consumption. The feed pre-mix composition, herein also called feed pre-mixture composition or pre-feed composition, comprises or essentially contains olive oil and aromatic herbs.

In the context of the present invention, the term "aromatic herbs" refers to both the leafy and/or the woody parts of herbs, including the derivatives of said parts.

Thus, the term "aromatic herbs" includes by-products of aromatic herbs, deemed not fit for human consumption. In preferred embodiments, the feed pre-mix composition or the feed composition comprises parts, derivatives or by-products of aromatic herbs or herb species, e.g. woody parts, being not suitable for human consumption.

The feed pre-mix composition of the present invention comprises the following components:
a) Olive Oil. Olive oil contains high levels of monounsaturated fatty acids (MUFA) and a wide range of antioxidants, such as vitamin E and a whole class of substances, the polyphenols. In the present invention, the term "olive oil" refers to both high-quality and low-quality olive oils, such as extra virgin olive oil, virgin olive oil, pure olive oil, light olive oil, refined olive oil, olive pomace oil and mixtures thereof.
   The feed pre-mix composition comprises olive oil preferably in a quantity of from 0.5% to 95% (wt), preferably between 10% to 70% (wt), more preferably between 20% to 60% (wt) and most preferably between 25% to 50% (wt). The final feed composition preferably comprises olive oil in a quantity between 0.5% to 15% (wt), preferably between 1% to 7 % (wt) and most preferably between 1% to 5 % (wt). All values herein referring to % (wt) refer to % by weight.
b) Aromatic herbs. The term "aromatic herbs" generally refers to herbaceous plants, usually perennial, parts of which are suitable for edible use in humans. In the present invention, the term "aromatic herbs" refers to one or more aromatic plants from the group consisting of the *Lamiaceae* family, namely from the *Origanum* genus,e.g. *Origanum vulgare, Origanum onites, Origanum dictamnus*; the *Thymus* genus, e.g. *Thymus capitatus, Thymus vulgaris;and* the *Salvia* genus, e.g. *Salvia officinalis, Salvia fruticosa*; as well as the *Cistaceae family*, in particular the genus Cistus, such as *Cistus creticus.*

According to a first aspect of the present invention, the aromatic herb component of the herein disclosed feed pre-mix composition comprises or consists of one or more species of the genus Origanum, such as *Origanum vulgare, Origanum majorana, Origanum onites* and *Origanum dictamnus.* The species of the genus *Origanum* are preferably used in amounts between 1%-100 % (wt), preferably in amounts between 2%-80% (wt), more preferably between 3%-60% (wt) and even more preferably between 5%-50% (wt) of the total aromatic herbs used in the feed pre-mix composition.

According to a second aspect of the present invention, the aromatic herb component of the herein disclosed feed pre-mix composition comprises or consists of a combination of two or more herbs or herb species from the group consisting of the genera *Origanum* and *Thymus.* According to this aspect, the species of the genus *Thymus,* in particular *Thymus vulgaris* or *Thymus capitatus*, are preferably used in amounts between 1%-100% (wt), preferably in amounts between 2%-70% (wt), more preferably between 3%-60% (wt) and even more preferably between 5%-40% (wt) of the total aromatic herbs used in the feed pre-mix composition. The species of the genus *Origanum* are preferably used in the same amounts as defined under the first aspect.

In a third aspect of the present invention, the aromatic herb component of the herein disclosed feed pre-mix composition comprises or consists of a combination of two or more herbs or herb species from the group consisting of the genera *Origanum*, *Thymus* and *Salvia* genera. According to this aspect, wherein *Salvia officinalis* or *Salvia fruticosa* are the preferred species used from the *Salvia* genus, the species of the genus *Salvia* are preferably used in amounts between 1%-100% (wt), preferably in amounts between 2%-70% (wt), more preferably between 3%-60% (wt) and even more preferably between 5%-40% (wt) of the total aromatic herbs used in the feed pre-mix composition. The species of the genus *Origanum* are preferably used in the same amounts as defined under the first aspect, and the species of the genus *Thymus* are preferably used in the same amounts as defined under the second aspect.

According to a fourth aspect of the present invention, the aromatic herb component of the herein disclosed feed pre-mix composition comprises or consists of a combination of two or more herbs or herb species from the group consisting of the genera *Origanum, Thymus, Salvia* and *Cistus.* According to this aspect, wherein the *Cistus creticus* is preferably used as the *Cistus* species, the species of the genus *Cistus* are preferably used in amounts between 0.5%-100% (wt), preferably in amounts between 1%-35% (wt) and more preferably between 1%-25% (wt) of the total aromatic herbs used in the feed pre-mix composition. The species of the genus *Origanum* are preferably used in the same amounts as defined under the first aspect, the species of the genus *Thymus* are preferably used in the same amounts as defined under the second aspect, and the species of the genus *Salvia* are preferably used in the same amounts as defined under the third aspect.

An exemplary composition of the aromatic herb component of the feed pre-mix composition comprises 2%-80% wt herbs of genus *Origanum,* 2%-70% wt herbs of genus *Thymus,* 2%-70% wt herbs of genus *Salvia,* and 1%-35% wt herbs of genus *Cistus.* Another exemplary composition of the aromatic herb component of the feed pre-mix composition comprises 3%-60% wt herbs of genus *Origanum,* 3%-60% wt herbs of genus *Thymus,* 3%-60% wt herbs of genus *Salvia,* and 1%-35% wt herbs of genus *Cistus.* A specific exemplary composition of the aromatic herb component of the feed pre-mix composition is as follows: *Origanum vulgare* (5-50% wt), *Thymus vulgaris* (5-40% wt), *Origanum dictamnus* (1-15% wt), *Salvia officinalis* (5-40% wt) and *Cistus creticus* (1-35% wt).

The feed pre-mix composition may contain a total amount of aromatic herbs ranging from 0.5% to 95% (wt), preferably from 5% to 50% (wt) and more preferably from 10% to 40% (wt) of the feed pre-mix composition (wt).

The final feed composition contains aromatic herbs preferably in an amount of from 0.5% to 20% (wt), preferably of from 1% to 15% (wt), more preferably of from 1% to 10% (wt) and most preferably of from 1.5% to 5% (wt). The feed pre-mix composition and the final feed composition contain aromatic herbs suitable for use in the feed of meat-producing animals.

Preferably, the above feed pre-mixture composition further contains carob. The fruit of the carob tree is an excellent source of sugars (∼ 50%) and gross energy. It contains vitamins (e.g. vitamin C, B2 and E) and natural antioxidants. According to this aspect, carob is preferably used in amounts of from 0.5%-80% (wt), preferably of from 5%-70% (wt) and more preferably of from 10%-50% (wt) of the feed pre-mixture composition. In a preferred embodiment of the present invention, the final feed composition may contain carob, in particular in an amount of from 0.5% to 20% (wt), preferably from 1% to 15% (wt), more preferably from 1% to 10% (wt) and most preferably from 1.5% to 5% (wt).

The final feed composition may comprise, in addition, conventional feed ingredients, such as wheat, corn, barley, oilseeds (cottonseed, sunflower seed, rapeseed, flaxseed, soybean etc.) and products thereof.

The feed pre-mixture composition or the final feed composition is administered to the animals for ad libitum consumption, in particular during the fattening period. The term "meat-producing animals" refers to animals who are intended for meat production. A non-restrictive list of meat-producing animals includes swine, sheep, goat, cattle, poultry (chicken, turkey) etc.

The term "meat" refers to animal flesh, mostly muscle tissue, used as food for humans. In the context of the present invention, the term "meat" includes the meat of cattle (e.g. beef meat, veal meat), swine (i.e. pork meat), sheep, goat, poultry (e.g. chicken meat, turkey meat, duck meat, or geese meat) and of other edible animals, such as fish and wild game animals. The term "meat", as herein used, also comprises the products of meat, such as processed meat-based products, for example sausages, ham, burgers, meat-balls, schnitzels, gyros- or kebab-type products, souvlaki-type products etc.

The final feed composition comprises the feed pre-mixture composition in an amount of from 1% to 30% (wt), in particular 1 % to 20% (wt), based on 100 % (wt) of the final feed composition.

In further embodiments, the invention also includes the use of the feed pre-mixture composition or the final feed composition for feeding meat-producing animals.

The feed pre-mixture composition or the final feed composition is administered ad libitum, and for periods of time that can vary depending on the type of animal, the age and the starting weight. Indicatively, the administration of said feed mixture to pigs, weighing 75.0 to 95.0 kg, during the fattening phase, for a period equal to or greater than 25 days before slaughtering, confers quality benefits to the produced meat, such as improved fat composition as far as its content of monounsaturated fatty acids is concerned, and importantly an improved taste and flavor, as well as tenderness. Similar results were obtained with the administration of the feed mixture to fattening cattles for a period equal to or greater than 40 days, and to fattening poultry for a period equal to or greater than 10 days.

In other embodiments, the invention also includes meat produced from animals having been fed with the feed pre-mixture composition or the feed composition, and meat based-products derived thereof.

The feed pre-mix composition is prepared by mixing together the olive oil, the aromatic herbs and optionally other pre-mix ingredients, optionally by using milling. The feed pre-mix composition is then combined with conventional feed ingredients by mixing and optionally milling, to produce the final feed composition. The feed pre-mix composition may be in the form of a liquid-based composition, mash, crumble, flour and/or pellet. The final feed composition may be provided in the form of mash, crumble, flour and/or pellet. The feed pre-mix composition can be fed to the animals either in form of the feed composition or directly without mixing with conventional feed ingredients before feeding.

The invention will be further illustrated by the following example.

### Example

In order to investigate the effect of the feed pre-mixture to the organoleptic properties of the meat derived from fattening pigs, an experiment was carried out with the dietary treatment as shown in Table 1.

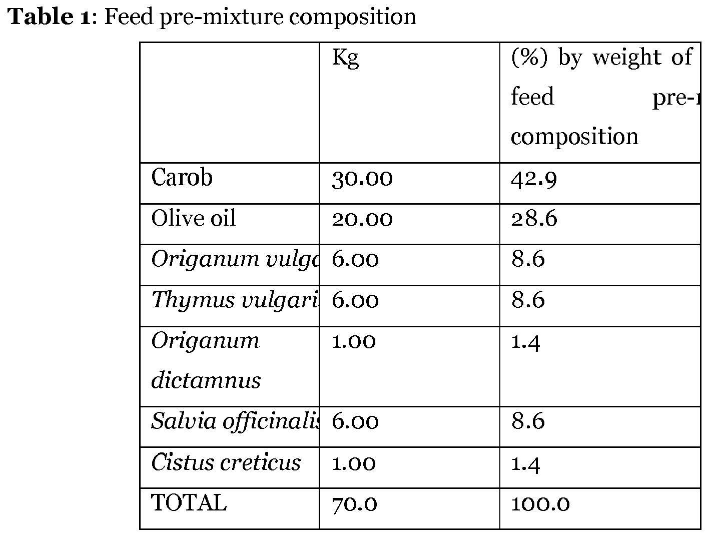

The fattening pigs have been divided into two groups (A and B), of 23 individuals each, aged 160 days, weighing from 80.0 to 89.0 kg. The feeding treatment program lasted for 28 days, prior to slaughtering. Group A received the conventional mixture (2) of Table 2, and constituted the control group. Group B received the feed mixture (1) of Table 2, including the feed pre-mix composition of Table 1. The composition of the two feeds for groups (A) and (B) was calculated to be comparable in terms of energy and protein levels. The feed was delivered as a flour, for ad libitum consumption.

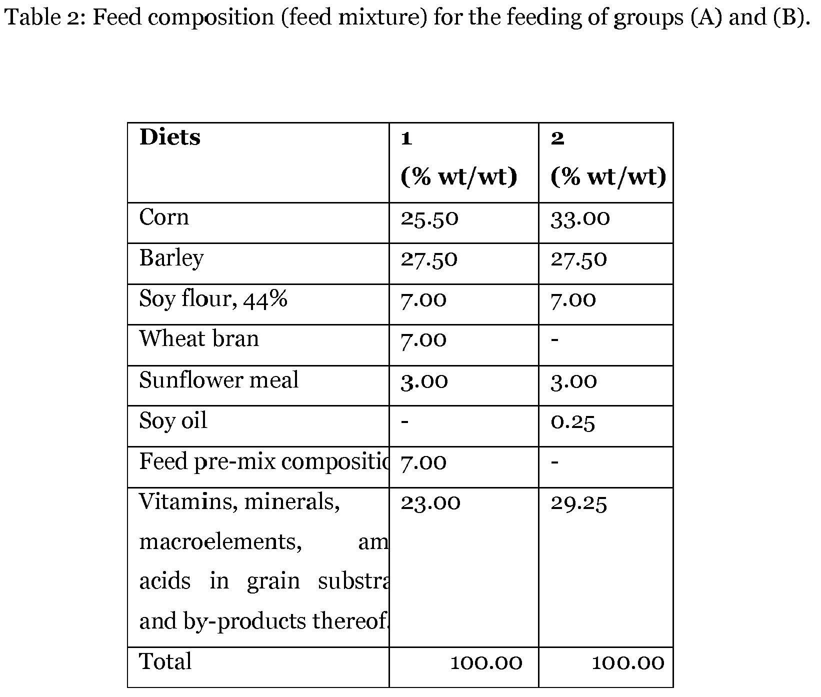

The derived meat samples were evaluated and ranked based on total preference, in particular based on taste, flavor and tenderness of cooked meat samples.

Two pieces of loin from each group were cut into cubes of 5 x 5 cm and baked in baking bags for 30 minutes at 180°C. All tested samples had similar fat content, around 5%. A panel of 10 expert testers participated in a sensory test, and rated the coded samples with scores from 1 (less desirable) to 5 (very desirable). The results of the sensory test are given in Table 3. These results show, on one hand, that the differentiation between the samples of different groups A-B is clearly perceived, and on the other hand that the cooked meat derived from pigs fed with the herein disclosed feed pre-mix composition scored higher in terms of total preference. The higher score of Group B samples was justified by the improved flavor, aroma and tenderness of the tested samples.

**Table 3: Groups A and B scoring based on total preference.**

| Baked loin samples | Average score |
|---|---|
| A | 3.20 |
| B | 4.36 |

## Claims

1. A feed pre-mix composition suitable for the feeding of meat-producing animals, comprising olive oil and at least one aromatic herb or herb species selected from the group of plant genera consisting of *Origanum, Thymus, Salvia and Cistus.*

2. The feed pre-mix composition of claim 1, comprising at least two, at least three or at least four aromatic herbs or herb species selected from the group of plant genera consisting of *Origanum, Thymus, Salvia and Cistus.*

3. The feed pre-mix composition of claim 1 or 2, comprising one or more aromatic herbs of the genus *Origanum.*

4. The feed pre-mix composition of any one of claims 1 to 3, comprising one or more aromatic herbs of the genus *Thymus.*

5. The feed pre-mix composition of any one of claims 1 to 4, comprising one or more aromatic herbs of the genus *Salvia.*

6. The feed pre-mix composition of any one of claims 1 to 5, comprising one or more aromatic herbs of the genus *Cistus.*

7. The feed pre-mix composition of any one of claims 1 to 6, comprising aromatic herbs in an amount of from 0.5% to 95% (wt), in particular 5% to 50%(wt), preferably 10% to 40% (wt).

8. The feed pre-mix composition of any one of claims 1 to 7, comprising olive oil in an amount of from 0.5% to 95% (wt), in particular 10% to 70% (wt), preferably 20% to 60% (wt).

9. The feed pre-mix composition of any one of claims 1 to 8, further comprising carob, in particular in an amount of from 0.5% to 80% (wt), preferably 5% to 70% (wt).

10. A feed composition comprising a feed pre-mix composition according to any one of claims 1 to 9.

11. The feed composition of claim 10, which comprises aromatic herbs in an amount of from 0.5% to 20% (wt), in particular 1% to 15% (wt).

12. The feed composition of claim 10 or 11, which comprises olive oil in an amount of from 0.5% to 15% (wt), in particular 1% to 7% (wt).

13. The feed composition of any one of claims 10 to 12, which comprises carob in an amount of from 0.5% to 20% (wt), in particular 1% (wt) to 15% (wt).

14. Use of the feed pre-mix composition according to any one of claims 1 to 9 or the feed composition of any one of claims 10 to 13, for the feeding of meat-producing animals.

15. Meat obtainable by using the feed pre-mix composition according to any one of claims 1 to 9 or the feed composition of any one of claims 10 to 13.
